(19) Europäisches Patentamt
European Patent Office
Office européen des brevets

(11) **EP 4 119 990 A1**

(12) **EUROPEAN PATENT APPLICATION**

(43) Date of publication:
**18.01.2023  Bulletin 2023/03**

(51) International Patent Classification (IPC):
***G01T 3/00*** (2006.01)

(21) Application number: **21187551.3**

(52) Cooperative Patent Classification (CPC):
**G01T 3/008**

(22) Date of filing: **23.07.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.07.2021  PT 2021117343**

(71) Applicant: **Universidade de Coimbra
3004-531 Coimbra (PT)**

(72) Inventors:
• **AMARO, FERNANDO DOMINGUES POMBAL (PT)**
• **Monteiro, CRISTINA MARIA BERNARDES Figueira da Foz (PT)**
• **DUARTE, NUNO FILIPE VISEU COIMBRA (PT)**
• **MARCOS, JOÃO DE SENA BAPTISTA PIMENTEL MARCOS JOÃO DE SENA BAPTISTA PIMENTEL (PT)**

(74) Representative: **do Nascimento Gomes, Rui
J. Pereira da Cruz, S.A.
Rua Victor Cordon, 10-A
1249-103 Lisboa (PT)**

(54) **A GASEOUS DETECTOR AND A METHOD FOR THE DETERMINATION OF THE POSITION OF AT LEAST ONE NEUTRON**

(57)     The present invention is enclosed in the area of neutron position sensitive or neutron imaging methodologies and detectors, in particular gas-based detectors, for the determination of the position of neutrons. The detector of the present invention involves determining the position of a neutron through the simultaneous detection of the two secondary particles arising from a single interaction of such neutron with a neutron sensitive material, thereby providing an enhanced detection of a neutron, based on the detection of less events than prior-art detectors, and allowing to use a variety of neutron sensitive materials.

Fig. 6

## Description

## FIELD OF THE INVENTION

The present invention is enclosed in the area of neutron position sensitive or neutron imaging methodologies and detectors, in particular gas-based detectors, for the determination of the position of neutrons.

## PRIOR ART

Neutron imaging techniques are a vital non-destructive tool, widely used in a range of industrial, medical and consumer applications. Direct imaging methods (neutron radiography) are used to probe mechanical objects in industry and indirect methods (diffraction, small-angle scattering) to observe deformation patterns in materials and shapes of biological molecules, to name few applications.

It is such a key research field that the world is venturing into the construction of novel massive neutron sources, along with the upgrade of many in operation for decades. The flagship being the European Spallation Source (ESS), a multi-disciplinary research facility equipped with what will be the world's most powerful pulsed neutron source; foreseen to start its scientific program in 2025. The list of novel large-scale neutron facilities includes the US Spallation Neutron Source (SNS), the Life Science Experimental Facility in Japan and the China Spallation Neutron Source. These have recently started their operation, gradually increasing the number of instruments operating in each facility.

Efficient, high counting rate detectors with position discrimination capability are urgently needed to take full benefit of the high intensity neutron beams at these sources. Traditional multi-wire proportional counters (MWPC) with He-3 are no longer an alternative; since 2009 the world is living a He-3 shortage as the use of this gas for border security has become the top priority. The lack of this precious He isotope has already put a hold on the production of several novel neutron instruments at SNS. For ESS alone, its 22 instruments will have a total area coverage of 283 m$^2$, which cannot be satisfied using He-3 detectors.

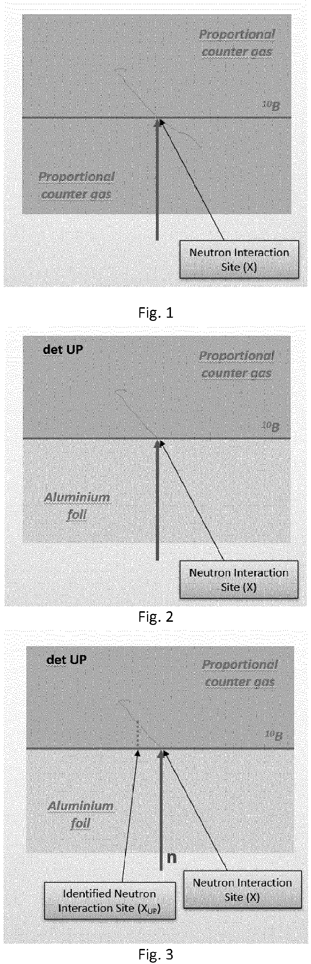

Alternative solutions have been identified and are known in the art, from which the use of thick Boron-10 layers (B-10) inside a gaseous detector, are the most promising. As in the case of He-3 solutions, neutron detection in thick B-10 layers is performed via a nuclear capture reaction with the emission of 2 by-products, isotropically emitted in opposite directions, along the same line (back-to-back). Fig. 1 contains a representation of such reaction. These by-products are highly ionizing charged particles which leave a trail of ionizations in a gas that can be subsequently measured and used to identify the neutron position.

Yet, in prior art B-10 detectors, the thick solid B-10 layer is either deposited on a thick substrate or on the walls of the detector and acts only as conversion material for an incoming neutron. The detection medium for the by-products is a proportional gas, in contact with the B-10 layer. As such, and since the by-products are emitted back-to-back (as represented in Fig. 1), one of them (at least one) is lost into the B-10 layer or into the material were the B-10 is deposited or coated (meaning not detected by the detector) as the B-10 layer and substrate combined thickness is larger than the range of the by-products. Such situation is represented in Fig. 2. And while the other, detectable, by-product may escape into the gas, it has there a large range and therefore the neutron capture position in the B-10 layer seldom matches the one of the actual particle in the gas, as represented in Fig. 3.

Therefore, a large number of events is required to accurately estimate the neutron interaction position on the B-10 layer, since these solutions always loose the information regarding the direction along which the two by-products were emitted.

The present solution innovatively overcomes the referred issues associated with prior art solutions.

## SUMMARY OF THE INVENTION

It is an object of the present invention a gaseous detector for the determination of the position of at least one neutron.

In an embodiment, the gaseous detector comprises:

i) at least one thin layer comprising a neutron sensitive material such that a first and a second secondary particle are simultaneously generated from a single interaction of a neutron with the neutron sensitive material and the thin layer having a thickness such that the first and second secondary particles are able to escape the thin layer,
ii) at least two detection elements, each of the detection elements being capable to detect at least one interaction of each of the said secondary particles with a gas provided within the detector, and
iii) computational means, the computational means being configured to, based on the detection in each of the detection elements of the said at least one interaction of each the two secondary particles with the gas, determining the position of a corresponding neutron,

wherein the at least two detection elements are substantially opposed to each other and the at least one thin layer is positioned in between such detection elements.

In an embodiment, the detection elements are configured such that the detection of an interaction of a secondary particle with the gas provided within the detector comprises determining the position and/or the energy of each of such secondary particles.

In a specific embodiment, the computational means are further configured such that the determination of the position of the corresponding neutron comprises performing an average of the determined positions of the first and second secondary particles.

In another more specific embodiment, the computational means are further configured such that the determination of the position X (of coordinates x, y) of the corresponding neutron specifically comprises determining said average by applying the relation:

$$X = \frac{E_1 \times X_2 + E_2 \times X_1}{E_1 + E_2}$$

wherein:

$E_1$ consists of the energy of a first secondary particle detected in a first detection element,
$E_2$ consists of the energy of a second secondary particle detected in a second detection element,
$X_1$ consists of the position of a first secondary particle detected in a first detection element, and
$X_2$ consists of the position of a second secondary particle detected in a second detection element.

In an embodiment, the computational means are further configured for providing that the detection in each of the detection elements of the said at least one interaction of each the two secondary particles is such that the two interactions are simultaneously detected, provided a predefined minimum time tolerance.

In another embodiment, the neutron sensitive material comprises Boron, Lithium or Gadolinium.

In yet another embodiment, the detector further comprises a neutron transparent material layer having a thickness such that the first and second secondary particles are able to escape through such neutron transparent material layer, the thin layer being provided on the neutron transparent material layer.

In a specific embodiment, the neutron transparent material comprises or consists of biaxially-oriented polyethylene terephthalate (BoPET) or Polyimide foil or a graphene based material or aluminium.

In another, more specific, embodiment, the BoPET layer has a thickness of less than 1.1 $\mu$m, optionally 0.7-1.1 $\mu$m, optionally 0.9 $\mu$m.

In an embodiment comprising a neutron transparent material layer, the detector comprises a conductive material layer and a single thin layer, the single thin layer provided directly on a side of the neutron transparent material layer, the neutron transparent material layer being directly provided on the conductive material layer, and the conductive material layer having a thickness such that the first and second secondary particles are able to escape through such conductive material layer.

In a specific embodiment, the conductive material layer is an Aluminium layer, optionally with a thickness of 10-20 nm, optionally 15 nm.

In an embodiment comprising a neutron transparent material layer, the detector comprises two thin layers, each of such layers being directly provided on a different side of the neutron transparent material layer.

In an embodiment of the detector, a plurality of ensembles is provided, each formed by a thin layer and a neutron transparent material layer, the thin layer of an ensemble being directly provided on a side of a neutron transparent material layer, each of such ensembles being substantially surrounded by said gas.

In a more specific embodiment, the detector comprises a plurality of ensembles, each formed by two thin layers and a same neutron transparent material layer, the two thin layers of an ensemble being directly provided on a different side of a same neutron transparent material layer, each of such ensembles being substantially surrounded by said gas.

In an embodiment comprising a neutron transparent material layer, the neutron sensitive material specifically comprises Boron, in particular Boron carbide.

In a specific embodiment in which the neutron sensitive material specifically comprises Boron, in particular Boron carbide, and comprising a single thin layer, the thickness of the single thin layer is less than 1.5 $\mu$m, optionally within the range of 0.5-1.5, optionally 0.8-1.1 $\mu$m, optionally 1 $\mu$m.

In an alternative embodiment in which the neutron sensitive material specifically comprises Boron, in particular Boron carbide, and comprising two thin layers, the sum of the thicknesses of each two thin layers is less than 1.5 $\mu$m, optionally within the range of 0.5-1.5, optionally 0.8-1.1 $\mu$m, optionally 1 $\mu$m.

In an alternative embodiment, the neutron sensitive material comprises Lithium.

In a specific embodiment in which the neutron sensitive material specifically comprises Lithium, and comprising a single thin layer, the thickness of the single thin layer is less than 23 $\mu$m, optionally within the range of 17-23 $\mu$m, optionally 20 $\mu$m.

In an alternative embodiment in which the neutron sensitive material specifically comprises Lithium, and comprising two thin layers, the sum of the thicknesses of each two thin layers is less than 23 $\mu$m, optionally within the range of 17-23 $\mu$m, optionally 20 $\mu$m.

In another embodiment, the at least one thin layer is provided a) in parallel or substantially in parallel with the opposing detection elements or b) transversally, forming a $\theta$ angle with the opposing detection elements.

It is also an object of the present invention a method for the determination of the position of at least one neutron.

In an embodiment, the method comprises the following steps:

i) a first and a second secondary particle are simultaneously generated from a single interaction of a neutron with a neutron sensitive material of a thin layer, the thin layer having a thickness such that the first and second secondary particles are able to escape the thin layer,

ii) detecting in two opposing sections at least one interaction of each of the said secondary particles with a gas, the thin layer of step i) being provided in between such sections, and

iii) based on the two detections of step ii), determining the position of a corresponding neutron.

In an embodiment of the method, the detection of step ii) comprises determining the position and/or the energy of each of said secondary particles.

In another, more specific, embodiment of the method the determination of the position of the corresponding neutron comprises performing an average of the determined positions of the first and second secondary particles.

In another, even more specific, embodiment of the method, the determination of the position $X$ (of coordinates x, y) of the corresponding neutron specifically comprises determining said average by applying the relation:

$$X = \frac{E_1 \times X_2 + E_2 \times X_1}{E_1 + E_2}$$

wherein:

$E_1$ consists of the energy of a first secondary particle detected in a first section,

$E_2$ consists of the energy of a second secondary particle detected in a second, opposing, section,

$X_1$ consists of the position of a first secondary particle detected in a first section, and

$X_2$ consists of the position of a second secondary particle detected in a second, opposing, section.

In another embodiment of the method, the detection of step ii) is such that the two interactions are simultaneously detected, provided a predefined minimum time tolerance.

In an embodiment of the method, the neutron sensitive material comprises Boron, Lithium or Gadolinium.

In another embodiment of the method, the thin layer is provided on a neutron transparent material layer having a thickness such that the first and second secondary particles are able to escape through such neutron transparent material layer.

In another embodiment of the method, the neutron transparent material comprises or consists of biaxially-oriented polyethylene terephthalate (BoPET).

In a specific embodiment of the method, the BoPET layer has a thickness of 0.7-1.1 $\mu$m, optionally 0.9 $\mu$m.

In an embodiment of the method in which the at least one thin layer is provided on a neutron transparent material layer, the method further provides that a single thin layer is provided directly on a side of a neutron transparent material layer, and the neutron transparent material layer being directly provided on a conductive material layer, and the conductive material layer having a thickness such that the first and second secondary particles are able to escape through such conductive material layer.

In a specific embodiment of the method, the conductive material layer is an Aluminium layer, optionally with a thickness of 10-20 nm, optionally 15 nm.

In an embodiment of the method in which the at least one thin layer is provided on a neutron transparent material layer, the method further provides that two thin layers are directly provided on a different side of the neutron transparent material layer.

In an embodiment of the method, a plurality of ensembles is provided, each formed by a thin layer and a neutron transparent material layer, the thin layer of an ensemble being directly provided on a side of a neutron transparent material layer, each of such ensembles being substantially surrounded by said gas.

In a more specific embodiment of the method, a plurality of ensembles is provided, each formed by two thin layers and a same neutron transparent material layer, the two thin layers of an ensemble being directly provided on a different side of a same neutron transparent material layer, each of such ensembles being substantially surrounded by said gas.

In an embodiment of the method in which the at least one thin layer is provided on a neutron transparent material layer, the method further provides that the neutron sensitive material specifically comprises Boron, in particular Boron carbide.

In an embodiment of the method in which the neutron sensitive material specifically comprises Boron, in particular Boron carbide, and in which a single thin layer is provided, the thickness of the single thin layer is less than 1.5 $\mu$m, optionally within the range of 0.5-1.5, optionally 0.8-1.1 $\mu$m, optionally 1 $\mu$m.

In an alternative embodiment of the method in which the neutron sensitive material specifically comprises Boron, in particular Boron carbide, and in which two thin layers are provided, the sum of the thicknesses of each two thin layers is less than 1.5 $\mu$m, optionally within the range of 0.5-1.5, optionally 0.8-1.1 $\mu$m, optionally 1 $\mu$m.

In an alternative embodiment of the method in which the at least one thin layer is provided on a neutron transparent material layer, the method further provides that the neutron sensitive material comprises Lithium.

In an embodiment of the method in which the neutron sensitive material specifically comprises Lithium, and in which a single thin layer is provided, the thickness of the single thin layer is less than 23 $\mu$m, optionally within the range of 17-23 $\mu$m, optionally 20 $\mu$m.

In an embodiment of the method in which the neutron sensitive material specifically comprises Lithium, and in which two thin layers are provided, the sum of the thicknesses of each two thin layers is less than 23 $\mu$m, optionally within the range of 17-23 $\mu$m, optionally 20 $\mu$m.

In yet another embodiment of the method of the present invention, the at least one thin layer is provided a) in parallel or substantially in parallel with the opposing sections of step ii) or b) transversally, forming a $\theta$ angle with the opposing sections of step ii).

It is yet an object of the present invention a computational method for the determination of the position of at least one neutron based on one or more signals.

In an embodiment, the computational method comprises the steps of

i) obtaining one or more signals comprising information on at least one simultaneous interaction of each of a first and a second secondary particles with a gas, the first and the second secondary particle being generated from a single interaction of a neutron with a neutron sensitive material,
ii) based on such signal, determining the position of a corresponding neutron.

In an embodiment of the computational method, the signal of step i) comprises information on the position and/or the energy of each of said secondary particles.

In a specific embodiment of the computational method, the determination of the position of the corresponding neutron comprises performing an average of the determined positions of the first and second secondary particles.

In a more specific embodiment of the computational method, the determination of the position $X$ (of coordinates x, y) of the corresponding neutron specifically comprises determining said average by applying the relation:

$$ X = \frac{E_1 \times X_2 + E_2 \times X_1}{E_1 + E_2} $$

wherein:

$E_1$ consists of the energy of a first secondary particle,
$E_2$ consists of the energy of a second secondary particle,
$X_1$ consists of the position of a first secondary particle, and
$X_2$ consists of the position of a second secondary particle.

In another embodiment of the computational method, the two interactions are simultaneously detected, provided a predefined minimum time tolerance.

It is also an object of the present invention a computer program product.

In an embodiment of the computer program product, it comprises instructions which, when the program is executed by a computer, cause the computer to carry out the steps of the computational method of the present invention, in any of its embodiments.

It is also an object of the present invention a computer-readable storage medium.

In an embodiment of the computer-readable storage medium, it comprises instructions which, when executed by a computer, cause the computer to carry out the steps of the computational method of the present invention, in any of its embodiments.

## DESCRIPTION OF FIGURES

Figure 1 - a representation of a thermal neutron capture reaction with a thin $^{10}$B film, in which two secondary particles (an alpha particle and a Li ion) are emitted in the same line of action. The two lines spanning from the $^{10}$B film refer to each of the two particles. These particles are emitted back-to-back, along a same direction.

Figure 2 - a representation of a prior art solution in which a thermal neutron capture reaction with a $^{10}$B film, or a thin 10B film deposited in a thick substrate. With this arrangement it is only possible to collect the information (position and energy) of one of the said secondary particles produced in the neutron capture reaction: the other is always absorbed in the conversion layer, in which case it is provided on a thick substrate. An alpha particle (depicted in the figure) has a range of several mm in the gas. It deposits charge along its path, which is later read by an appropriate detector and from which the position X is extracted (usually taken from the centre of gravity of the track). Since the alpha particle production in the $B_4C$ layer is isotropic, it can be emitted inside the gas in a direction within a range of 180 degrees. As so, most frequently the "position" does not match the neutron interaction site. The indetermination can be resolved by averaging several events, which are distributed around the neutron interaction site. "Det UP" represents a detector provided in a section stipulated as above the 10B film and thick substrate.

Figure 3 - a representation of the track of an alpha particle, having a range of several mm in the gas. It deposits charge along its path, which is later read by an appropriate detector (det UP) and from which the "position" is extracted (usually taken from the centre of gravity of the track). As can be seen through this representation, the determined position is quite distanced from that of the actual neutron interaction site X or position X.

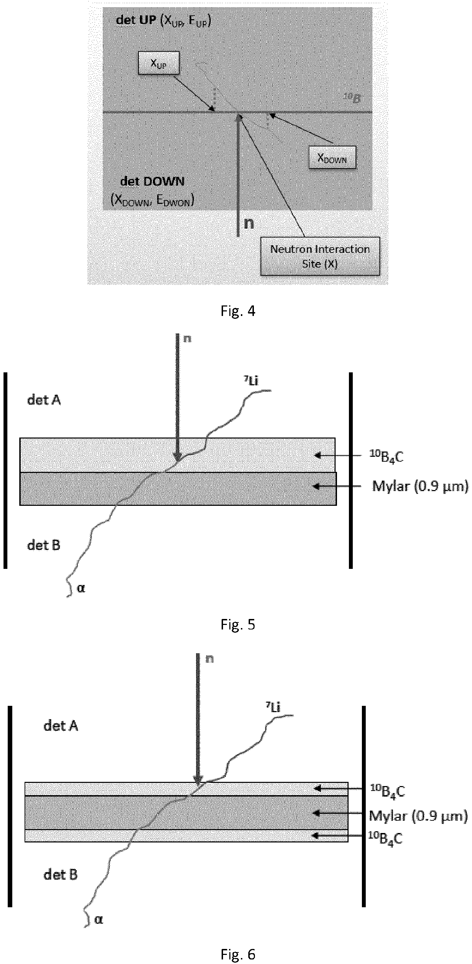

Figure 4 - a representation of a thermal neutron capture reaction with a thin $^{10}$B film, in which two secondary particles (an alpha particle and a Li ion) are emitted in the same line of action and detectable through two detection elements provided oppositely (det UP and det DOWN), which determine the position X and the energy E of each of the secondary particles, through measurements $X_{UP}$ and $E_{UP}$ (position and energy as detected / measured in det UP) and $X_{DOWN}$ and $E_{DOWN}$ (position and energy as detected / measured in det DOWN). As in Fig. 1, the two lines spanning from the $^{10}$B film refer to each of the two particles. These particles are emitted back-to-back, along a same direction.

Figure 5 - a representation of the same situation as of Fig. 4 with an embodiment having a single thin layer of Boron carbide coating a BoPET or Mylar layer. Two secondary particles - $\alpha$ and $^7$Li - are generated, and their tracks of interaction of the gas are detectable by the detection elements (not shown).

Figure 6 - a representation of the same situation as of Fig. 4 with an embodiment having two thin layers of Boron carbide, each coating a side of a BoPET or Mylar layer. Two secondary particles - $\alpha$ and $^7$Li - are generated in an interaction with one of the two thin layers, and their tracks of interaction of the gas are detectable by the detection elements (not shown).

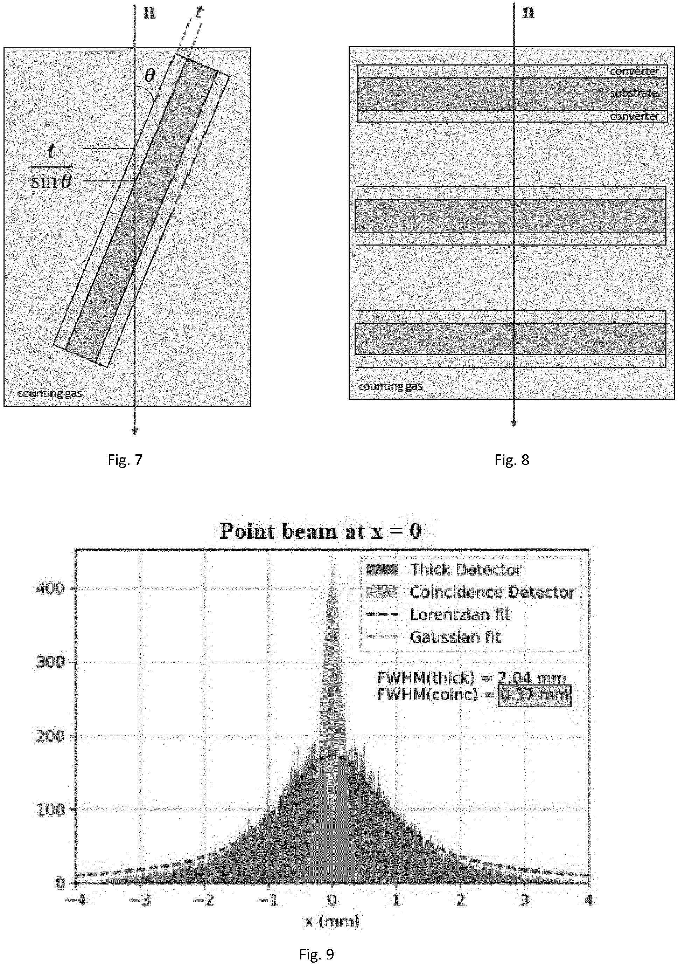

Figure 7 - a representation of an embodiment according to Fig. 6, in which an ensemble of two thin layers and neutron transparent material layer are tilted of an angle $\theta$. The thickness of each thin layer is t.

Figure 8 - a representation of an embodiment according to Fig. 6, in which a plurality of ensembles of thin layers and neutron transparent material layer are provided. Each ensemble is substantially surrounded by the gas.

Figure 9 - graphical representation of the data obtained from a simulation containing position resolution comparisons of a single thin layer detector (e.g., as of Fig. 5, named coincidence detector), when compared with a prior art thick layer detector, and providing several times full-width half-maximum (FWHM) reduction when compared to the thick layer detector of prior art.

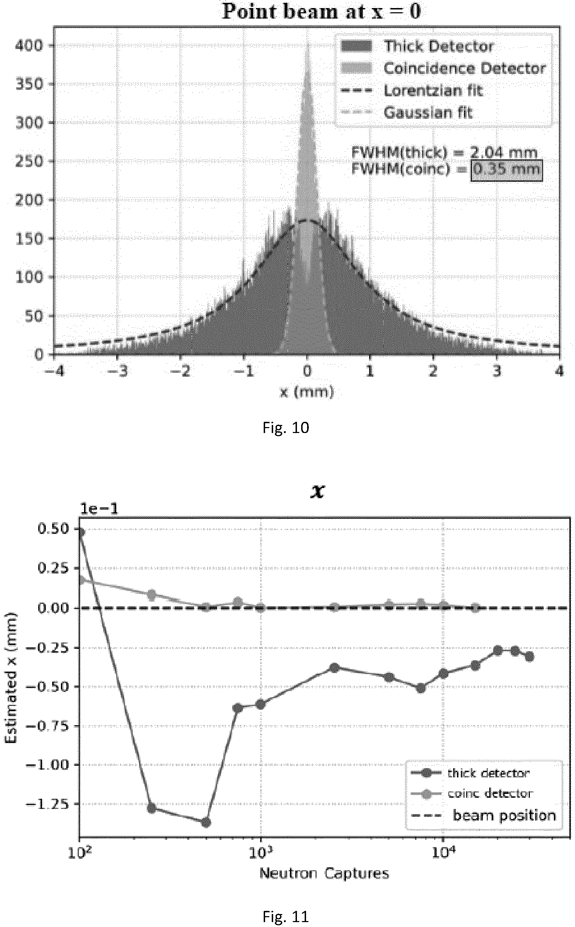

Figure 10 - graphical representation of the data obtained from a simulation containing position resolution comparisons of a double thin layer detector (e.g., as of Fig. 6), when compared with a prior art thick layer detector, and both providing several times full-width half-maximum (FWHM) reduction when compared to the thick layer detector of prior art.

Figure 11 - graphical representation of the data obtained from a simulation containing the determination of the position x and comparing the results of a detector according to the present invention and a thick layer detector.

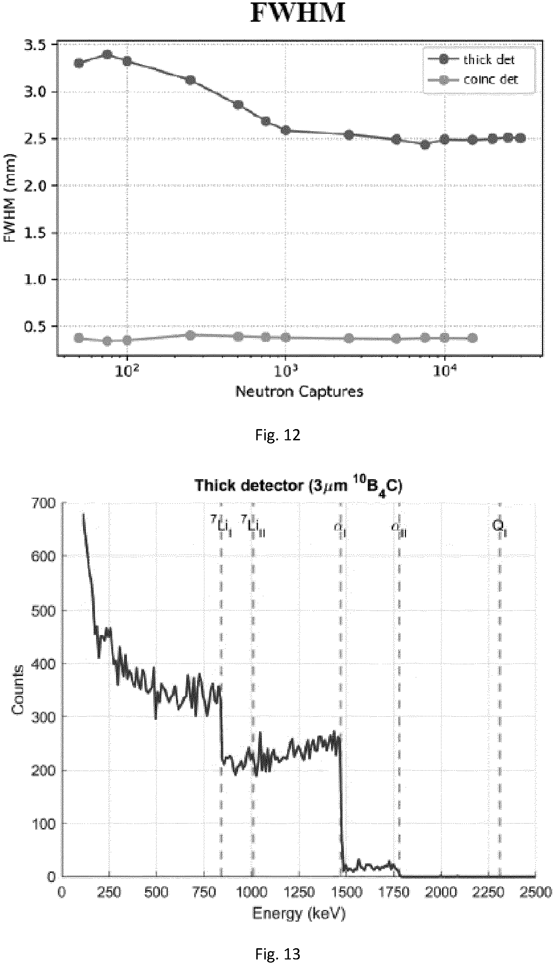

Figure 12 - graphical representation of the data obtained from a simulation containing the determination of the position resolution (full-width half-maximum, FWHM) and comparing the results of a detector according to the present invention and a thick layer detector.

Figure 13 - graphical representation of the data obtained from a simulation in respect of a prior art thick layer solution, providing Pulse Height Spectra (PHS).

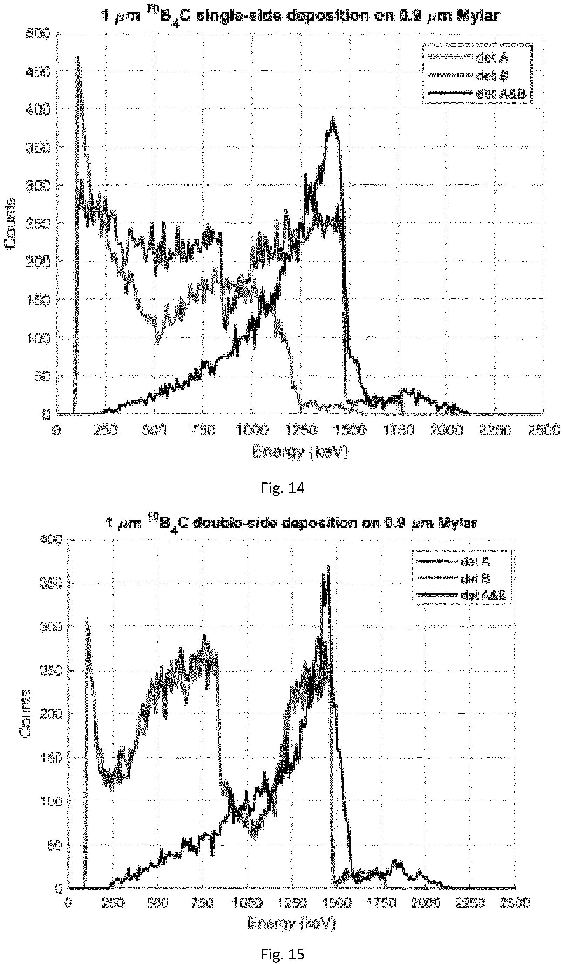

Figure 14 - graphical representation of the data obtained from a simulation in respect of a single thin layer detector (e.g., as of Fig. 5), providing Pulse Height Spectra (PHS).

Figure 15 - graphical representation of the data obtained from a simulation in respect of a double thin layer detector (e.g., as of Fig. 6), providing Pulse Height Spectra (PHS).

## DETAILED DESCRIPTION

The more general embodiments of the present invention are described in the Summary of the invention. Such configurations are detailed below in accordance with other advantageous and/or preferred embodiments of implementation of the present invention, and are applicable to the corresponding embodiments and/or details of the gaseous detector, method, computational method, computer program product and computer-readable storage medium of the present invention.

The detector of the present invention involves determining the position of a neutron through the detection of two secondary particles from a single interaction of such neutron with a neutron sensitive material, thereby providing an enhanced detection of a neutron, based on the detection of less events than required to achieve similar position resolution for state of the art alternatives and allowing to use a variety of neutron sensitive materials.

Thus, the detector of the present invention provides also a reduced time consumption when compared to prior art solutions.

The said neutron may be any type of neutron, typically a thermal neutron, such as a low-energy thermal neutron.

The detector of the present invention allows to determine the position of one or more neutrons.

The secondary particles may be referred to as by-products of the interaction.

The neutron sensitive material is provided in a thin layer, the thin layer having a thickness such that the first and second secondary particles are able to escape the thin layer.

In an embodiment, the thin layer may comprise thin particles of a neutron sensitive material (such as a material comprising Boron, Lithium or Gadolinium).

The thin particles may be organized, forming the thin layer, in a regular on in a non-regular form.

The thin particles may be aggregated and/or provided on a neutron transparent material layer by means of an adhesive such as a water-based glue or epoxy resin.

The thin particles may be aggregated and/or provided on a neutron transparent material layer by means of an adhesive and through the action of a solvent, such as water in the case that adhesive is a water-based glue or ethanol in the case that the adhesive is epoxy resin.

The thin particles may be arranged to form the thin layer, for instance being provided on the neutron transparent material, by means of the process of drip-coating, for instance through Boron nanoparticles which may, in an embodiment, range in diameter size from 0.05 to 0.4 $\mu$m.

The composition of the thin layer may be entirely or mostly of, the neutron sensitive material.

Fig. 1 presents the generation or emission of the two secondary particles/by-products, randomly emitted in opposite directions, along a same line of action or, in other words, back-to-back, in a same direction.

As referred, the particles are able to escape the thin layer, which defines the thickness of the thin layer, meaning that the thickness of the thin layer is such that the particles are able to leave the thin layer while not being absorbed by it. In the prior art solutions, only one neutron is able to escape the thick neutron sensitive layer.

Examples of suitable thicknesses are provided below.

As both the secondary particles are able to escape the thin layer, also both are detectable, in particular by the detection elements.

The detector of the present invention is a gaseous detector, thereby comprising a gas.

It may be referred that the detector is gas filled, and that the gas surrounds the area in which the at least one thin layer is provided, which may be referred to as a chamber.

As is known in the art, gaseous detectors comprise hermetically sealed chambers, in which neutron sensitive materials are provided, and such chambers comprising the said gas.

As referred, the gas and/or the chamber are such that the said secondary particles interact with the gas.

The chamber may thereby also contain a plurality of electrodes including at least one anode and at least one cathode for generating an electric field within the cavity upon the application of a voltage to the electrodes, thereby supporting the detection of the electrical charges resulting of the gas molecules ionization by the secondary particles.

The detection elements are thereby capable to detect the said at least one interaction of each of the said secondary particles with the gas provided within the detector.

The secondary particles or by-products may consist of ionizing charged particles - such as highly ionizing charged particles - which leave a trail of ionizations in the gas, that can be subsequently measured and used to identify the neutron.

The gas may consist, for instance and in a non-limiting form, of Ar-$CO_2$ or a mixture of a noble gas and a molecular gas such as $CO_2$ or $CH_4$.

When the neutron sensitive material comprises Boron, for instance Boron carbide, the secondary particles include an alpha particle and a Lithium ion.

When the neutron sensitive material comprises Lithium, the secondary particles include an alpha particle and a tritium ion.

Based on the detection of the interaction of each the two secondary particles with the gas, provided in the opposing the detection elements, the position of a corresponding neutron is determined.

Such determination thereby consists of a position reconstruction, as the detection of the interaction of the secondary particles with the gas allows to reconstruct the neutron interaction position on the neutron sensitive material thin layer.

The gaseous detector of the present invention thereby improves neutron detectors, which may be referred to as position sensitive neutron detectors, by using one or more neutron sensitive material thin layers.

This solution opens the unique possibility of detecting both of the two secondary particles, emitted back-to-back after a neutron capture by a neutron sensitive material atom.

This enables simultaneous detection of both particles emitted back-to-back, making a more efficient use of the information available in the neutron capture reaction.

As so, with fewer events - when compared to prior art solutions - it is possible to determine the position of a neutron.

Thereby, it is also possible to reconstruct the reaction line - in respect to the interaction between the secondary particles and the gas - and to locate the neutron interaction site in the thin layer with greater precision than in the prior art alternatives.

These are much needed features, to take full advantage of novel neutron sources under construction, as the European Spallation Source (ESS).

The neutron sensitive material thin layer may consist of a foil, such as a Boron carbide foil.

When the detector comprises a single layer, it may have a thickness of 0.5-1.5 microns, preferably 0.8-1.1 $\mu$m, thereby consisting of an extremely thin Boron carbide foil.

Despite the decrease in the thickness of the neutron sensitive material layer when compared to prior art solutions, the obtained information, which may include, for instance, the positions and energies of both secondary particles / by-products, compensates for the loss of events (when compared to thick prior art layers) as it in fact allows a much superior position determination/reconstruction.

In an embodiment, the detection elements may comprise a multi-wire proportional chamber (MWPC), Gas Electron Multiplier (GEM), Micro-MEsh Gaseous Structure (MicroMegas), THick GEM (THGEM), or another equivalent equipment.

In an embodiment, the spacing between wires of the MWPC may be of 2 mm.

In an embodiment, two MWPC may be provided as detection elements, thereby acting as position (1D) detectors. Such MWPC may be made with 50 μm thick tungsten wire, with 2 mm spacing.

Position may be reconstructed with charge division by resistive line method.

120 Ohm surface mounted component (SMD) resistors may be used to create a resistive line of MWPCs.

Moreover, the computational means of the detector of the present invention may be physically provided together with the detection elements and the thin layer, in a single device, or remotely, in which case the detection in each of the detection elements or the information relative to such detections, is remotely transmitted through transmission means from the detection elements to the computational means.

For instance, the computational means may be provided in a server.

The determination of the position of the neutron performed by the detector of the present invention may be provided by an average of positions and energies of the secondary particles as detected by the detection elements. In particular, the following relation may be implemented by the computational means (in which X is a position of x, y coordinates):

$$X = \frac{E_1 \times X_2 + E_2 \times X_1}{E_1 + E_2}$$

In which $E_1$ consists of the energy of a first secondary particle detected in a first detection element, $E_2$ consists of the energy of a second secondary particle detected in a second detection element, $X_1$ consists of the position of a first secondary particle detected in a first detection element, and $X_2$ consists of the position of a second secondary particle detected in a second detection element.

Such relation allows to enhance the determination of the position of the neutron, through the average of the positions on each detection element, weighted by the energy measured on the other detection element.

The computational means may be configured for providing that the detection in each of the detection elements of the said at least one interaction of each of the two secondary particles is such that the two interactions are simultaneously detected, provided a predefined minimum time tolerance.

Thereby, in such embodiment, the information on the two secondary particles to be used in the determination of the position of a neutron refers to two secondary particles which are considered to be, or labelled as, coinciding, in particular in time.

A predefined minimum time tolerance between the moments of detection of each of the two secondary particles may be provided.

The detector may further comprise a neutron transparent material layer having a thickness such that the first and second secondary particles are able to escape through such neutron transparent material layer, the thin layer being provided on the neutron transparent material layer.

In an embodiment, the thin layer may be deposited on the neutron transparent material layer.

In an embodiment, the thin layer may consist of a coating of the neutron transparent material layer.

In an embodiment, the thin layer is a Boron carbide thin layer, thereby being deposited on a corresponding neutron transparent material layer.

The Boron carbide neutron sensitive material thin layer may be in substantially fluid form, thereby being deposited on the neutron transparent material layer.

The neutron transparent material layer may consist of a structural backing layer for the thin layer.

The neutron transparent material layer may comprise or consist of a biaxially-oriented polyethylene terephthalate layer (BoPET).

In addition, in an embodiment, the detector may further comprise a conductive material layer, the neutron transparent material layer being directly provided on the conductive material layer. Such conductive material layer also has such a thickness that the first and second secondary particles are able to escape through such conductive material layer.

The conductive material layer thereby allows to avoid space charge effects, when the neutron transparent material is not conductive.

When the neutron transparent material layer comprises or consists of a biaxially-oriented polyethylene terephthalate layer the conductive material layer may comprise or consist of an Aluminium layer.

The neutron transparent material layer, or BoPET layer, may thereby be deposited or coated with a conductive material layer, such as a thin Al layer.

The detector may comprise a single thin layer or two separate layers, each provided on the neutron transparent material layer.

In both cases, the overall thickness is the same: the thickness of the single layer or the sum of thicknesses of the two layers.

An exemplary embodiment of a single thin layer detector is presented in Fig. 5, and an exemplary embodiment of a two-layers thin layer detector is presented in Fig. 6.

In the single thin layer detector of Fig. 5, one of the sides of the neutron transparent layer - which may consist of a BoPET foil - is coated with the neutron sensitive material thin layer - which may consist of a 1 μm Boron carbide layer. The other side of the neutron transparent layer is coated with the conductive material layer, which may consist of a 15 nm thick Aluminium layer, which helps to avoid space charge effects considering the insulating properties of BoPET.

In the double thin layer detector of Fig. 6, each side of the the neutron transparent layer - which may consist of a BoPET foil - is coated with a different neutron sensitive material thin layer - which may consist of two 0.5 $\mu$m Boron carbide layers.

The neutron sensitive material may comprise different materials, being, for instance, Boron, Lithium or Gadolinium based.

The gaseous detector of the present invention may be described as suitable for efficiently detecting neutrons.

It may comprise a chamber in which gas is provided, the chamber also containing the at least one thin layer of the present invention, having a neutron sensitive material such as Boron carbide.

The thin layer may be provided on a neutron transparent material layer, such as a BoPET layer.

In an embodiment, the at least one thin layer may be provided substantially in parallel with the opposing detection elements.

In another embodiment, the at least one thin layer may be provided transversally, forming a $\theta$ angle with the opposing detection elements, and thereby forming a tilted detector, the tilt being defined through the $\theta$ angle.

Such solution may facilitate an adaption of the depth associated with the neutron sensitive material, as a neutron may have to cross a distance within the neutron sensitive material which is higher than the thickness of the neutron sensitive material, and which is of:

$$\frac{t}{\sin \theta}$$

where t is the thickness of the thin layer and $\theta$ is the tilt angle.

Fig. 7 provides a representation of such tilted detector embodiment.

In an embodiment, the detector may also comprise a plurality of ensembles. Each of such ensembles is formed by one of the said two thin layers and a same neutron transparent material layer. The two thin layers are thereby directly provided on a different side of the neutron transparent material layer. For instance, an ensemble may consist of a BoPET layer with a Boron carbide coating provided on each of its two sides.

Each of the ensembles is substantially surrounded by the gas, and thereby a stacked configuration is formed, which - as the tilted detector embodiment previously described - allows to improve the efficiency of the detector.

Fig. 8 provides a representation of such stacked detector embodiment.

The detector may contain a combination of a tilted detector with a stacked detector, in which the several ensembles are tilted of an angle $\theta$.

The detector of the present invention may be used in several different applications.

The detector may be provided adjacently to a neutron source emitting a neutron beam, thereby detecting and determining the position of neutrons of the beam emitted by such source, for instance for the calibration and/or control of such source/beam.

The detector may also be provided adjacently to an object to be analysed which in turn is provided between a neutron source emitting a neutron beam and the said detector. The detector thereby detects and determines the position of neutrons which are deviated while interacting with the object, thereby enabling the analysis of the object. A possible arrangement of such detector with regard to the neutron beam is presented, for instance, in Figures 5 and 6.

In addition, two detectors may be provided: a first detector adjacently to a neutron source emitting a neutron beam, thereby detecting and determining the position of neutrons of the beam emitted by such source and a second detector provided adjacently to an object to be analysed which in turn is provided between the first detector (associated to the neutron source emitting a neutron beam) and the second detector. In such case, the first detector enables the calibration and/or control of the source and the second detector the analysis of the object.

## EXAMPLES AND RESULTS

Simulation tests were performed with an embodiment of two Boron carbide layers of 500 nm each placed on the sides of a 0.9 $\mu$m BoPET foil and irradiated by a beam of thermal neutrons, perpendicular to the foil.

The GEANT4 (GEometry ANd Tracking) platform was used in such simulations.

Each side of the foil was in contact with a gas, allowing the position and energy determination of each secondary particles

Neutron interaction position in the foil was inferred from the energy and the position of the secondary particles emitted in coincidence the neutron capture reaction, .

Other simulation tests were performed using a prior art solution, consisting of a 5 $\mu$m thick Boron carbide layer deposited on a 0.9 $\mu$m BoPET foil and recording the position of the only by-product/secondary particle which escapes the Boron carbide layer, for comparison.

Results show an improvement by a factor of 6 in the neutron position resolution with the thin Boron carbide layer solution when compared to the thick layer prior art solution, as shown by Figs. 9 and 10.

Moreover, the position resolution with this solution converges to its ultimate value (0.28 mm) with just ~50 events detected, while for the alternative ~1000 events are needed to attain 1.88 mm. Taking into account the detection efficiency of both options it infers a 90% exposure time reduction of our solution, reflecting the much more efficient use of the information available in the neutron capture reaction.

Figs. 9 and 10 represent, respectively, results of simulations covering position resolution comparisons of a single thin layer detector and a double thin layer detector, when compared with a prior art thick layer detector, and both providing five times full-width half-maximum (FWHM) position resolution reduction when compared to the thick layer detector of prior art.

Figs. 11 and 12 represent, respectively, results of simulations containing the determination of the position x and the corresponding FWHM, comparing the results of a detector according to the present invention and a thick layer detector.

Clearly, the detector of the present invention provides high precision in determining the neutron position, even with a small number of neutron detections.

Figs. 13-15 provide Pulse Height Spectra (PHS) comparison with results for a thick layer prior art detector (Fig. 11), a single layer detector according to the present invention (Fig. 12) and a double layer detector according to the present invention (Fig. 13).

Of course, the preferred embodiments shown above are combinable, in the different possible forms, being herein avoided the repetition of all such combinations.

**Claims**

1. A gaseous detector for the determination of the position of at least one neutron **characterised in that** it comprises:

    i) at least one thin layer comprising a neutron sensitive material such that a first and a second secondary particle are simultaneously generated from a single interaction of a neutron with the neutron sensitive material and the thin layer having a thickness such that the first and second secondary particles are able to escape the thin layer,
    ii) at least two detection elements, each of the detection elements being capable to detect at least one interaction of each of the said secondary particles with a gas provided within the detector, and
    iii) computational means, the computational means being configured to, based on the detection in each of the detection elements of the said at least one interaction of each the two secondary particles with the gas, determining the position of a corresponding neutron,

    wherein the at least two detection elements are substantially opposed to each other and the at least one thin layer is positioned in between such detection elements.

2. A detector according to the previous claim wherein the detection elements are configured such that the detection of an interaction of a secondary particle with the gas provided within the detector comprises determining the position and the energy of each of such secondary particle and,

optionally, the computational means are further configured such that the determination of the position of the corresponding neutron comprises performing an average of the determined positions of the first and second secondary particles, and

optionally, the computational means are further configured such that the determination of the position X of the corresponding neutron specifically comprises determining said average by applying the relation:

$$X = \frac{E_1 \times X_2 + E_2 \times X_1}{E_1 + E_2}$$

wherein:

$E_1$ consists of the energy of a first secondary particle detected in a first detection element,
$E_2$ consists of the energy of a second secondary particle detected in a second detection element,
$X_1$ consists of the position of a first secondary particle detected in a first detection element, and
$X_2$ consists of the position of a second secondary particle detected in a second detection element.

3. A detector according to any of the preceding claims wherein computational means are further configured for providing that the detection in each of the detection elements of the said at least one interaction of each the two secondary particles is such that the two interactions are simultaneously detected, provided a predefined minimum time tolerance, and/or

the neutron sensitive material comprises Boron, Lithium or Gadolinium.

4. A detector according to any of the preceding claims wherein it further comprises a neutron transparent material layer having a thickness such that the first and second secondary particles are able to escape through such neutron transparent material layer, the thin layer being provided on the neutron transparent material layer and,

Optionally the neutron transparent material comprises or consists of biaxially-oriented polyethylene terephthalate (BoPET) and, optionally, the BoPET layer has a thickness of less than 1.1 $\mu$m, optionally 0.7-1.1 $\mu$m, optionally 0.9 $\mu$m.

5. A detector according to the previous claim wherein it comprises a conductive material layer and a single thin layer, the single thin layer provided directly on a side of the neutron transparent material layer, the neutron transparent material layer being directly provided on the conductive material layer, and the conductive material layer having a thickness such that the first and second secondary particles are able to escape through such conductive material layer and, optionally,

the conductive material layer is an Aluminium layer, optionally with a thickness of 10-20 nm, optionally 15 nm.

**6.** A detector according to claim 4 wherein it comprises two thin layers, each of such layers being directly provided on a different side of the neutron transparent material layer and, optionally, it comprises a plurality of ensembles, each formed by:

- a thin layer and a neutron transparent material layer, the thin layer of an ensemble being directly provided on a side of a neutron transparent material layer, each of such ensembles being substantially surrounded by said gas, or
- two thin layers and a same neutron transparent material layer, the two thin layers of an ensemble being directly provided on a different side of a same neutron transparent material layer, each of such ensembles being substantially surrounded by said gas.

**7.** A detector according to any of the claims 4-6 wherein the neutron sensitive material specifically comprises Boron, in particular Boron carbide and, optionally

the detector is also according to claim 5 and wherein the thickness of the single thin layer is less than 1.5 $\mu$m, optionally within the range of 0.5-1.5, optionally 0.8-1.1 $\mu$m, optionally 1 $\mu$lm or

the detector is also according to claim 6 and wherein the sum of the thicknesses of each two thin layers is within the range of 0.5-1.5, optionally 0.8-1.1 $\mu$m, optionally 1 $\mu$m,

or

a detector according to any of the claims 6-13 wherein the neutron sensitive material comprises Lithium and, optionally

the detector is also according to claim 5 and wherein the thickness of the single thin layer is less than 23 $\mu$m, optionally within the range of 17-23 $\mu$m, optionally 20 $\mu$m or

the detector is also according to claim 6 and wherein the sum of the thicknesses of each two thin layers is within the range of 17-23 $\mu$m, optionally 20 $\mu$m.

**8.** A detector according to any of the preceding claims wherein the at least one thin layer is provided a) in parallel or substantially in parallel with the opposing detection elements or b) transversally, forming a $\theta$ angle with the opposing detection elements.

**9.** A method for the determination of the position of at least one neutron **characterised in that** it comprises:

i) a first and a second secondary particle being simultaneously generated from a single interaction of a neutron with a neutron sensitive material of a thin layer, the thin layer having a thickness such that the first and second secondary particles are able to escape the thin layer,

ii) detecting in two opposing sections at least one interaction of each of the said secondary particles with a gas, the thin layer of step i) being provided in between such sections, and

iii) based on the two detections of step ii), determining the position of a corresponding neutron.

**11.** A method according to the previous claim wherein the detection of step ii) comprises determining the position and/or the energy of each of said secondary particles and,

optionally, wherein the determination of the position of the corresponding neutron comprises performing an average of the determined positions of the first and second secondary particles and, optionally, wherein the determination of the position X of the corresponding neutron specifically comprises determining said average by applying the relation:

$$ X = \frac{E_1 \times X_2 + E_2 \times X_1}{E_1 + E_2} $$

wherein:

$E_1$ consists of the energy of a first secondary particle detected in a first section,

$E_2$ consists of the energy of a second secondary particle detected in a second, opposing, section,

$X_1$ consists of the position of a first secondary particle detected in a first section, and

$X_2$ consists of the position of a second secondary particle detected in a second, opposing, section.

**12.** A method according to any of the claims 10-11 wherein the detection of step ii) is such that the two interactions are simultaneously detected, provided a predefined minimum time tolerance, and/or wherein the neutron sensitive material comprises Boron, Lithium or Gadolinium.

**13.** A method according to any of the claims 10-12 wherein it is implemented by the apparatus of any of the claims 1-9.

**14.** A computational method for the determination of the position of at least one neutron based on one or more signals **characterised in that** it comprises:

> i) obtaining one or more signals comprising information on at least one simultaneous interaction of each of a first and a second secondary particles with a gas, the first and the second secondary particle being generated from a single interaction of a neutron with a neutron sensitive material,
> ii) based on such signal, determining the position of a corresponding neutron.

**15.** A computational method according to the previous claim wherein the signal of step i) comprises information on the position and/or the energy of each of said secondary particles and, optionally wherein the determination of the position of the corresponding neutron comprises performing an average of the determined positions of the first and second secondary particles and, optionally, wherein the determination of the position X of the corresponding neutron specifically comprises determining said average by applying the relation:

$$X = \frac{E_1 \times X_2 + E_2 \times X_1}{E_1 + E_2}$$

wherein:

> $E_1$ consists of the energy of a first secondary particle,
> $E_2$ consists of the energy of a second secondary particle,
> $X_1$ consists of the position of a first secondary particle, and
> $X_2$ consists of the position of a second secondary particle.

Fig. 1

Fig. 2

Fig. 3

Fig. 4

Fig. 5

Fig. 6

Fig. 7

Fig. 8

Fig. 9

Fig. 10

Fig. 11

# FWHM

Fig. 12

Fig. 13

Fig. 14

Fig. 15

Europäisches
Patentamt

European
Patent Office

Office européen
des brevets

## EUROPEAN SEARCH REPORT

**Application Number**

EP 21 18 7551

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARGATO L M S ET AL: "Boron-10 lined RPCs for sub-millimeter resolution thermal neutron detectors: Conceptual design and performance considerations", ARXIV.ORG, CORNELL UNIVERSITY LIBRARY, 201 OLIN LIBRARY CORNELL UNIVERSITY ITHACA, NY 14853, 19 June 2018 (2018-06-19), XP081140592, DOI: 10.1088/1748-0221/13/08/P08007 | 1,3,5-9, 11-13 | INV. G01T3/00 |
| Y | * the whole document * | 4 | |
| A | | 2,10,14 | |
| | ----- | | |
| X | US 2014/077093 A1 (UNO SYOUJI [JP]) 20 March 2014 (2014-03-20) | 1-3,9, 10,14 | |
| A | * paragraphs [0015], [0032], [0033], [0035], [0050] * * figure 1 * | 4-8, 11-13 | |
| | ----- | | |
| Y | US 2012/161023 A1 (WANG ZHEHUI [US] ET AL) 28 June 2012 (2012-06-28) | 4 | |
| A | * paragraphs [0020], [0021], [0023]; figure 1 * * figure 2 * | 1-3,5-14 | **TECHNICAL FIELDS SEARCHED (IPC)**<br>G01T |
| | ----- | | |
| A | US 2006/291606 A1 (MCGREGOR DOUGLAS S [US] ET AL) 28 December 2006 (2006-12-28) * paragraphs [0074] – [0077], [0081] * * figures 1,2 * | 1-14 | |
| | ----- | | |

| The present search report has been drawn up for all claims |

| Place of search | Date of completion of the search | Examiner |
|---|---|---|
| The Hague | 6 January 2022 | Wulveryck, J |

EPO FORM 1503 03.82 (P04C01)

## EP 4 119 990 A1

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2022

| Patent document cited in search report | | Publication date | Patent family member(s) | | Publication date |
|---|---|---|---|---|---|
| US 2014077093 | A1 | 20-03-2014 | JP | 6206948 B2 | 04-10-2017 |
| | | | JP | 2014029322 A | 13-02-2014 |
| | | | US | 2014077093 A1 | 20-03-2014 |
| US 2012161023 | A1 | 28-06-2012 | NONE | | |
| US 2006291606 | A1 | 28-12-2006 | CA | 2574835 A1 | 19-10-2006 |
| | | | US | 2006023828 A1 | 02-02-2006 |
| | | | US | 2006043308 A1 | 02-03-2006 |
| | | | US | 2006056573 A1 | 16-03-2006 |
| | | | US | 2006291606 A1 | 28-12-2006 |
| | | | US | 2007018110 A1 | 25-01-2007 |
| | | | WO | 2006110159 A2 | 19-10-2006 |

EPO FORM P0459

For more details about this annex : see Official Journal of the European Patent Office, No. 12/82